# EUROPEAN PATENT SPECIFICATION

(11) **EP 2 252 919 B1**
(45) Date of publication and mention of the grant of the patent: **08.05.2013**
(21) Application number: 09719895.6
(22) Date of filing: 09.03.2009
(51) Int. Cl.: G04G 3/00, H04B 10/00, H01S 3/00

(54) **OPTICAL CLOCK**
OPTISCHE UHR
HORLOGE OPTIQUE

(30) Priority: 10.03.2008 GB 0804410; 12.03.2008 GB 0804564
(43) Date of publication of application: 24.11.2010
(73) Proprietor: QinetiQ Limited, Farnborough Hampshire GU14 0LX (GB)
(72) Inventor: MCDONALD, Gregor John, Malvern, Worcestershire WR143PS (GB)
(74) Representative: Day, Caroline Margaret
(86) International application number: PCT/GB2009/000622
(87) International publication number: WO 2009/112811

(56) References cited:
- EP-A- 0 503 579
- EP-A- 0 504 834
- WO-A-2008/032021
- US-A1- 2005 036 525
- US-A1- 2005 265 407
- NG W ET AL: "Characterization of the Jitter in a Mode-Locked Er-Fiber Laser and Its Application in Photonic Sampling for Analog-to-Digital Conversion at 10 Gsample/s" JOURNAL OF LIGHTWAVE TECHNOLOGY, IEEE SERVICE CENTER, NEW YORK, NY, US, vol. 22, no. 8, 1 August 2004 (2004-08-01), pages 1953-1961, XP011116138 ISSN: 0733-8724 cited in the application

## Description

The invention relates to optical clocks.

Optical clocks which produce ultra-short optical pulses with low timing jitter are of interest in applications such as high bit-rate optical communication and photonic analogue-to-digital conversion (ADC). In the case of photonic ADC, ultra-short optical clock pulses are required so that an analogue signal can be sampled at a series of discrete times, avoiding integration over a range of signal values each time the analogue signal is sampled. Low timing jitter is desirable because errors in sampling time result in inaccurate conversion of a rapidly changing analogue signal.

Optical clocks having the above characteristics typically comprise modelocked lasers, for example a diode-laser modelocked in an external cavity. Such a device requires significant human intervention in order to set the device up and keep it running in a desired operational state. Such devices are therefore highly unsuited to practical applications outside the laboratory. Clocks based on modelocked fibre-lasers (see for example W. Ng et al, Journal of Lightwave Technology, 22, pp 1953 - 1961, 1994) provide some degree of physical and operational robustness, however such a device requires a feedback arrangement to compensate for drift in repetition rate resulting from path length changes caused by temperature fluctuations in the surrounding environment. Such clocks are therefore physically complex. Furthermore, modelocked lasers comprise very specialised components, making clocks based on them unsuitable for mass-production. Another problem associated with clocks based on modelocked lasers (including modelocked fibre-lasers) is that adjustment of the repetition rate of the optical clock pulses is complicated as this involves careful adjustment of the laser cavity length.

Patent document EP 0 504 834 discloses optical pulse transmission in a single mode fibre. WO 2008 032 021 discloses an optical clock which uses pulses from a laser having a line width sufficient to inhibit Stimulated Brillouin Scattering.

A first aspect of the invention provides an optical clock for generating a series of Optical clock pulses, the optical clock comprising a laser source for generating output having a plurality of spectral components, an amplitude-modulator arranged to cooperate with the laser source to produce a series of intermediate optical pulses each having said plurality of spectral components, and optical fibre arranged to provide dispersion of each intermediate optical pulse to form a plurality of component pulses each corresponding to a spectral component and to compress each component pulse, wherein the spectral width of each spectral component is sufficient to inhibit stimulated Brillouin scattering (SBS) of the component pulses within the optical fibre.

An optical clock of the invention is simple in terms of construction, is robust and may be assembled from readily-available components. Such a clock may operate indefinitely without human intervention. Compression of the component pulses occurs by soliton-effect compression, which includes self phase-modulation (SPM). Stimulated Brillouin scattering (SBS), which typically occurs within optical fibres at peak-powers also associated with SPM, and which can reduce optical power output and stability from the optical fibre, is inhibited as a result of the linewidth of the spectral components of the laser source. Unlike optical clocks based on modelocked lasers, precise alignment of the components of a clock of the invention is not required. Optical clock pulses output from the optical fibre have low timing-jitter and may be as short as 10-15 ps, or shorter, as a result of compression by SPM, or SPM and group velocity dispersion. Optical clock pulses output from the optical fibre may be used directly as optical clock pulses, or they may be manipulated in some way (e.g. pulse-picked) to produce a series of optical clock pulses.

Preferably, the optical clock is arranged to generate a continuous series of optical clock pulses at a repetition rate f_{clock}, the amplitude modulator being arranged to produce the intermediate pulses at a repetition frequency f_{clock}/N, where N is the number of spectral components of the laser source.

The laser source may comprise a laser oscillator arranged for operation on a plurality of longitudinal modes each of which corresponds to a spectral component, and modulating means arranged to produce phase-modulation in the output of the laser oscillator so that the spectral components have a linewidth sufficient to inhibit SBS. The modulating means may be a phase-modulator arranged to directly phase-modulate the output of the laser oscillator. Alternatively, if the laser oscillator is a semiconductor laser oscillator, the modulating means may comprise means arranged to modulate the injection-current of the semiconductor laser.

As an alternative to use of a single laser operating on a plurality of longitudinal modes, the laser source may comprise a plurality of laser oscillators each having an output of a respective output wavelength corresponding to a spectral component, a multiplexer arranged to multiplex outputs of the laser oscillators to produce a multiplexed output, and modulating means arranged to produced phase-modulation in the multiplexed output. The modulating means may comprise a phase-modulator arranged to phase-modulate the multiplexed output, or plural phase-modulators each arranged to phase-modulate the output of a respective laser oscillator prior to multiplexing. Alternatively, if each laser oscillator is semiconductor laser oscillator (e.g. a DFB laser) the modulating means may comprise means for modulating the injection-currents of the semiconductor laser oscillators.

In order to minimise timing-jitter in optical clock pulses of embodiments of the invention which comprise modulating means for producing phase-modulation in the output or outputs of one or more laser oscillators, preferably the modulating means is arranged to provide phase-modulation with a minimum modulation-depth consistent with inhibiting SBS in the optical fibre.

In order to reduce frequency-noise in the repetition frequency f_{clock} of optical clock pulses output from the clock in the range from 10 Hz to f_{clock}/2, and hence make the output optical clock pulses better suited to sampling applications (e.g. photonic ADC), preferably the modulating means is arranged to provide phase-modulation at a frequency equal to half the repetition frequency of the optical clock pulses. In some embodiments, the modulating means is arranged to carry out phase-modulation at a frequency less than half the repetition frequency of compressed component pulses output from the optical fibre, but means are provided to pulse-pick these optical pulses so that optical clock pulses have a repetition frequency equal to twice the frequency of phase-modulation.

The optical fibre may comprise standard telecommunications fibre, or alternating lengths of standard telecommunications fibre and dispersion-shifted fibre, or it may comprise dispersion decreasing fibre.

To reduce the output power required of the laser source, an optical amplifier (e.g. an erbium-doped fibre-amplifier (EDFA)) may be used to amplify the series of intermediate optical pulses prior to soliton-effect compression thereof in the optical fibre. The amount of amplified spontaneous emission entering the optical fibre from the amplifier may be reduced by using a circulator at the end of the optical fibre into which the series of phase-modulated optical pulses is introduced, the circulator being coupled to a Bragg grating having an appropriate grating-pitch.

An optical clock of the invention may be used to digitise an analogue electrical signal by inputting the optical clock pulses to a second amplitude modulator which is arranged to receive the electrical signal to be digitised. The resulting amplitude-modulated clock pulses may then be detected and digitised. Preferably, the resulting amplitude-modulated clock pulses are demultiplexed and pulses of different wavelengths detected and digitised in parallel. This provides faster conversion, or for a given conversion speed, allows use of lower speed and cheaper detection and digitisation electronics for the each of the various wavelengths in the amplitude-modulated optical clock pulses output from the second amplitude modulator.

Another aspect of the invention provides a method of generating a series of optical clock pulses, the method comprising the steps of:
(i) generating output from a laser source, the output having a plurality of spectral components;
(ii) amplitude-modulating the output of the laser source to produce an intermediate series of optical pulses each having said plurality of spectral components; and
(iii) passing the intermediate series of optical pulses through an optical fibre to provide dispersion of each intermediate optical pulse to form a plurality of component pulses each corresponding to a spectral component and to compress each component pulse, the spectral width of each spectral component being sufficient to inhibit stimulated Brillouin scattering (SBS) of the component pulses within the optical fibre.

Step (ii) may be carried out by amplitude-modulating the output of the laser source at a frequency f_{clock}/N to produce a continuous series of optical clock pulses having a repetition rate f_{clock}.

Step (ii) may be carried out by generating output from a laser oscillator arranged to operate on a plurality of longitudinal modes and producing phase-modulation in the output of the laser oscillator. In such methods, the step of producing phase-modulation in output of the laser oscillator may be carried out by phase-modulating the output of the laser oscillator. Alternatively, if the laser oscillator is a semiconductor laser oscillator, the step of producing phase-modulation in output of the laser oscillator ay be carried out by modulating the injection-current of the semiconductor laser oscillator.

Step (i) may be carried out by generating output from a plurality of laser oscillators each having an output of a respective output wavelength, multiplexing the outputs of the laser oscillators to provide a multiplexed output, and producing phase-modulation in the multiplexed output. In such methods, the step of producing phase-modulation in the multiplexed output may be carried out by phase-modulating the multiplexed output. Alternatively, the step of producing phase-modulation in the multiplexed output may be carried out by phase-modulating the output of each laser oscillator. As a further alternative, if the laser oscillators are semiconductor laser oscillators, the step of producing phase-modulation in the multiplexed output may be carried out by modulating the injection currents of the semiconductor laser oscillators.

The phase-modulation may be produced with a minimum modulation depth consistent with inhibiting SBS within the optical fibre.

The phase-modulation may be provided with a modulation frequency equal to half the repetition frequency of the optical clock pulses. In such methods, the phase-modulation may provided with a modulation frequency which is less than half the repetition frequency of compressed component pulses output from the fibre, the method further comprising the step of pulse-picking compressed component pulses output from the optical fibre to produce the series of optical clock pulses such that the repetition frequency thereof is equal to twice the frequency of the phase-modulation.

The method may further comprise the steep of amplifying the series of intermediate optical pulses prior to input thereof to an end of the optical fibre.

Another aspect of the invention provides an analogue-to-digital converter comprising an optical clock according the first aspect of invention and a second amplitude-modulator arranged to modulate the amplitude of optical clock pulses received from the clock in response to input of an analogue signal to be digitised.

The analogue-to-digital converter may further comprise a demultiplexer arranged to demultiplex output from the second amplitude modulator to produce a plurality of spectral components and means arranged to detect and digitise each spectral component.

Embodiments of the invention are described below by way of example only, and with reference to the accompanying drawings in which:
- Figure 1: shows a first example optical clock of the invention;
- Figures 2A & 2B: illustrate dispersion and soliton-effect compression of pul ses within an optical fibre comprised in the Figure 1 clock;
- Figures 3A & 3B: illustrate two modes of operation of the amplitude-modulator of the Figure 1 clock;
- Figure 4: shows a second example optical clock of the invention; and
- Figure 5: shows an analogue-to-digital converter of the invention incorporating the optical clock of Figure 4.

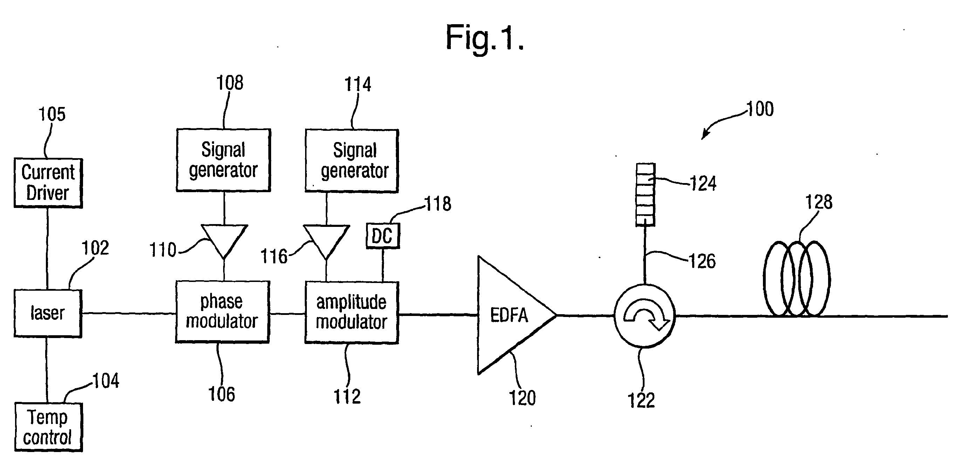

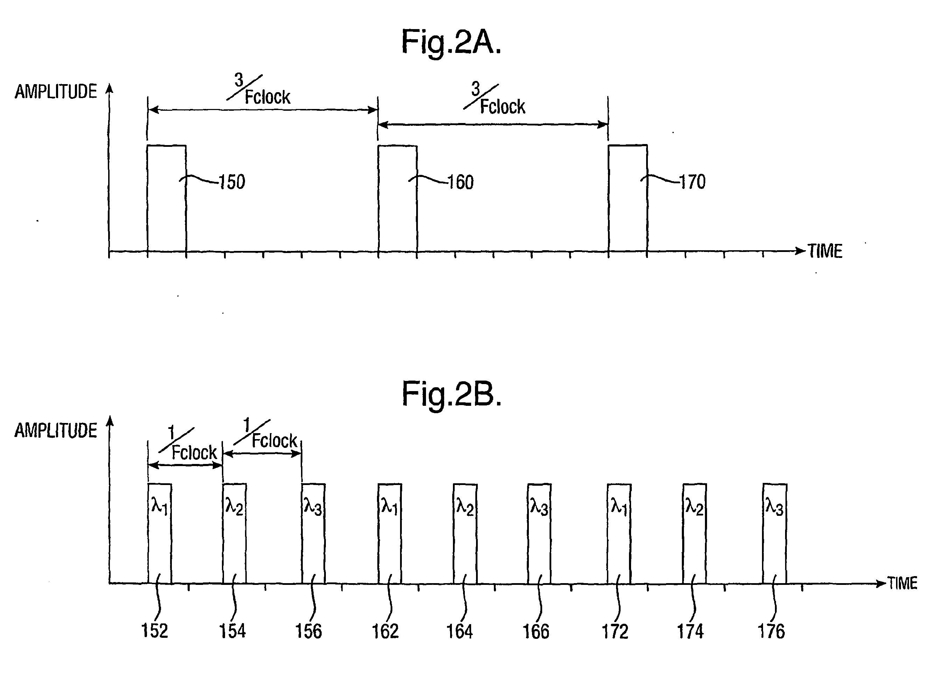

In Figure 1, an optical clock 100 of the invention comprises a semiconductor laser oscillator 102 arranged to operate on three longitudinal modes λ₁, λ₂, λ₃, each longitudinal mode being a spectral component of the output of the laser 102. The laser 102 is temperature-stabilised by a temperature-controller 104 to stabilise the output wavelengths of the laser 102. Output from the laser 102 passes to a phase-modulator 106 and then to a push/pull-type amplitude-modulator 112.
Modulators 106, 112 are standard devices, based on gallium arsenide for example, and are driven by signal generators 108, 114 the output signals of which are amplified by amplifiers 110, 116 before being applied to the modulators 106, 112. Signal generator 114 is an HP^{®} model 83711A. A DC supply 118 provides a DC bias to the amplitude-modulator 112. Optical output from the amplitude-modulator 112 is in the form of an intermediate series of optical pulses each of which comprises the spectral components λ₁, λ₂, λ₃ of the output of the laser 102. Three such intermediate pulses 150, 160, 170 are shown in Figure 2A.

Each intermediate pulse is amplified by an erbium-doped fibre-amplifier (EDFA) 120 and input to an optical fibre 128 via a circulator 122 which is coupled to a Bragg grating 124 by a short length of optical fibre 126. The optical fibre 128 is a 25.2 km length of SMF-28 fibre. The circulator 122 and Bragg grating 124 act to reduce amplified spontaneous emission within the optical fibre 128 originating from the EDFA 120.

The wavelength spacing of the longitudinal modes λ₁, λ₂, λ₃ of the laser 102, the length and dispersion characteristics of the optical fibre 128 and the operating frequency of the signal generator 114 are such that the intermediate pulses undergo dispersion into their spectral components on passing through the optical fibre 128. The component pulses also experience soliton-effect compression (including self-phase modulation, SPM) on passing through the optical fibre 128. For example, as shown in Figure 2B, the intermediate pulses 150, 160, 170 of Figure 2A disperse to form a group of nine compressed component pulses 152, 154, 156, 162, 164, 166, 172, 174, 176. Since there are three spectral components λ₁, λ₂, λ₃ in the output of the laser 102 (i.e. N=3), the amplitude-modulator 112 is arranged to operate at a frequency which is 1/3 of the frequency f_{clock} of the optical clock pulses.

The compressed component pulses output from the optical fibre 128 may have a duration of 10-15 ps, although shorter durations are possible. The EDFA 120 is adjusted so that the intermediate optical pulses have sufficient peak power to allow SPM.

It is desirable that the depth of the phase-modulation is no greater than is required to reduce SBS within the optical fibre 128 because larger modulation depths tend to increase timing-jitter in the optical clock pulses output from the clock 100.

The DC supply 118 is adjusted to keep the modulator 112 biased at null in order to avoid positive and negative chirping of successive optical pulses output from the amplitude-modulator 112, which would result in non-identical successive intermediate optical pulses.

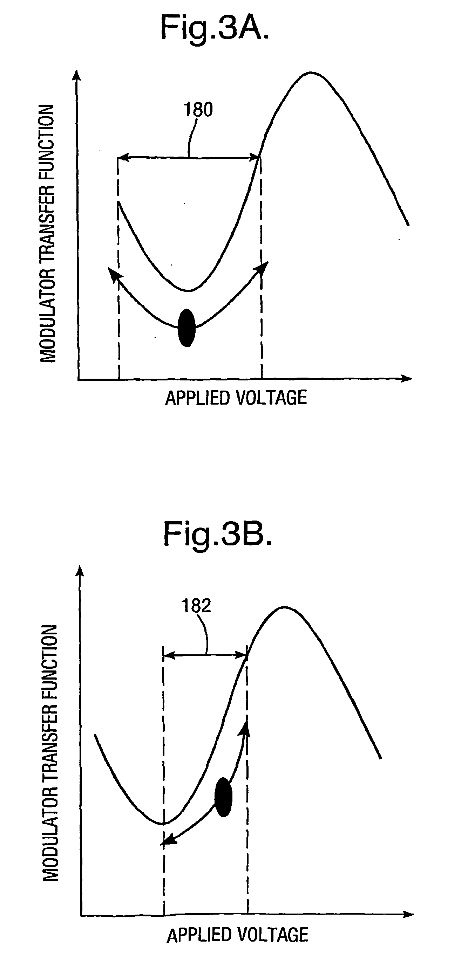

Figure 3A shows the operative portion of the modulation transfer function of the amplitude modulator 112 as a function of voltage applied by the DC supply 118. In the clock 100 of Figure 1 the bias voltage applied by the DC voltage supply 118 is adjusted so that a portion 180 of the function is utilised. Referring to Figure 3B, the DC supply 118 may alternatively be adjusted to bias the amplitude modulator 112 so that a portion 182 of the transfer function is used: in this case the repetition frequency of the intermediate pulses output by the modulator 112 is equal to the frequency of the signal applied by the signal generator 114 via the amplifier 110.

The operating frequency of the phase-modulator 106 is equal to half the repetition frequency of the compressed component pulses output from the optical fibre 128 and the compressed component pulses output from the optical fibre 128 are the optical clock pulses. In an alternative embodiment, the operating frequency of the phase-modulator 106 is less than half the repetition frequency of the compressed component pulses output from the optical fibre 128, but pulse-picking means is provided to eliminate certain pulses from the compressed component pulses output from the optical fibre 128 to produce the series of optical clock pulses at a repetition rate equal to twice the frequency of the phase-modulation. The pulse-picking means could be a step-recovery diode or an amplitude modulator, for example.

The clock 100 has the advantage that any drift in the output wavelengths of the laser 102 affects all the longitudinal modes equally, so that the repetition rate of the optical clock pulses is not affected.

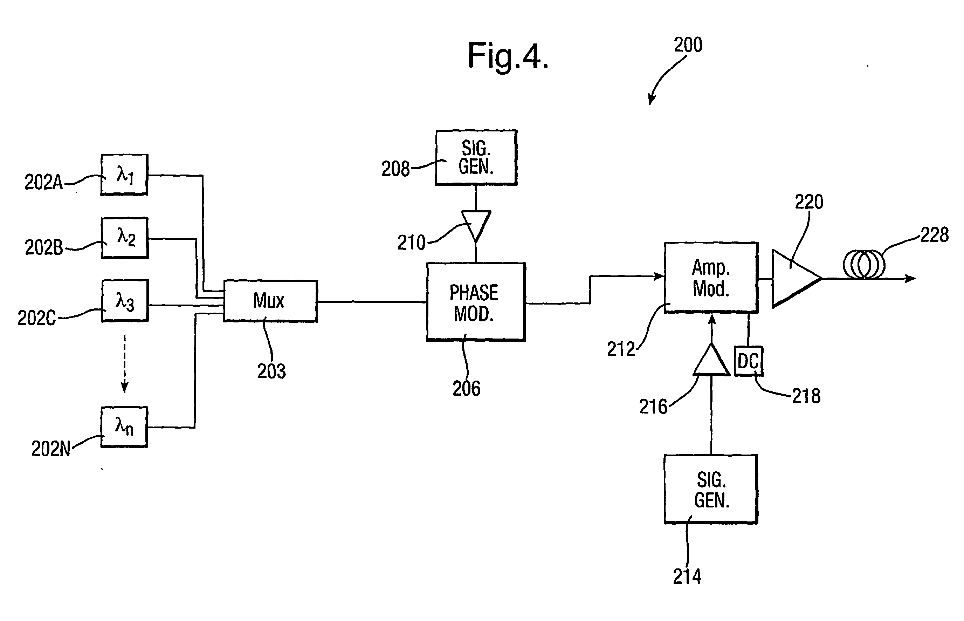

Figure 4 shows another optical clock 200 of the invention, comprising a plurality of lasers 202A, 202B, 202C,...202N each having an output of a respective wavelength λ₁, λ₂,...λₙ, a multiplexer 203, phase- and amplitude-modulators 206, 212 and associated signal generators 208, 214, amplifiers 210, 216, a DC supply 218, an EDFA 120 and an optical fibre 128.

Outputs from lasers 202 are multiplexed by the multiplexer 203 to produce a (single) multiplexed output having the spectral components λ₁, λ₂,...λₙ which is passed to the phase-modulator 206 and then to the amplitude-modulator 212 to produce a series of intermediate optical pulses. The intermediate optical pulses are amplified by the EDFA 220 and input to the optical fibre 228 which provides dispersion of the intermediate optical pulses into component pulses, and soliton-effect compression of the component pulses. The clock 200 outputs a continuous series of optical clock pulses. The phase-modulator 206 produces a phase-modulation in the output of the multiplexer 203 which is of sufficient depth to inhibit SBS of the component pulses within the optical fibre 228. The EDFA 220 is provided to ensure that the intermediate optical pulses have sufficient amplitude to give rise to SPM within the optical fibre 228.

The phase-modulator 206 is operated such that the frequency of phase-modulation is at least half the repetition frequency of compressed component pulses output from the fibre 228, so that these pulses are the optical clock pulses. Alternatively the modulator 206 may be operated such that the frequency of phase-modulation is less than half the repetition frequency of the compressed component pulses output from the optical fibre 228 and pulse-picking means provided to eliminate certain of the compressed component pulses output from the fibre 228 to produce the series of optical clock pulses.

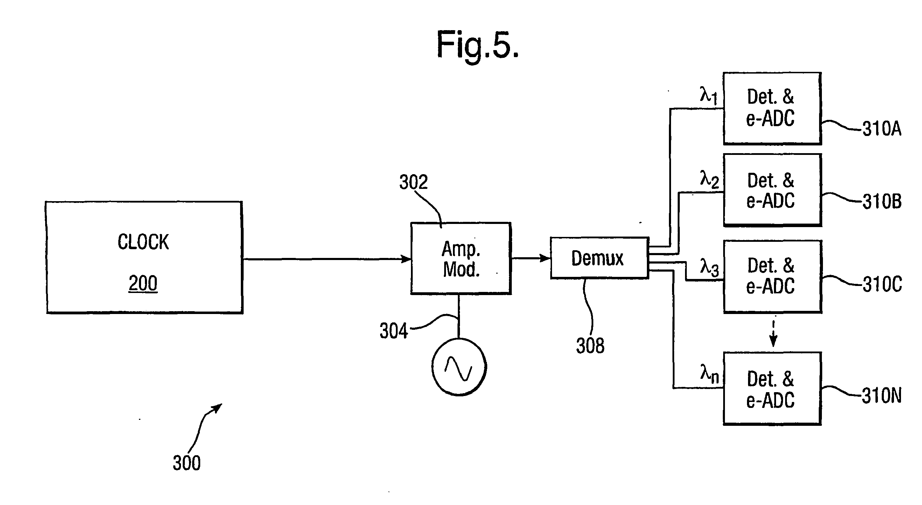

Referring to Figure 5, an analogue-to digital converter 300 of the invention comprises the optical clock 200 of Figure 4, a second amplitude-modulator 302, a demultiplexer 302 and plural electronic detection and digitisation units 310A, 310B,...310N, each corresponding to a spectral component λ₁, λ₂,...λₙ in the output of the optical clock 200.

An electrical signal to be digitised is provided to the amplitude-modulator 202 via an input 304. The output of the amplitude-modulator 302 comprises a series of optical pulses in which pulses of given wavelength have an amplitude corresponding to the amplitude of the input signal at a particular time or times. The spectral components in the output of the amplitude-modulator 302 are demultiplexed by the demultiplexer 308 and passed to respective electronic detection and digitisation units 310A, 310B, 310C,...310N. By providing for the various spectral components to be detected and digitised in parallel, lower speed electronics may be employed in the units 310 than would be the case if the pulses output from the modulator 302 were to be directly detected and digitised without demultiplexing.

## Claims

1. An optical clock (100; 200) for generating a series of optical clock pulses, the optical clock (100; 200) comprising a laser source (102; 202) for generating output having a plurality of spectral components, an amplitude-modulator (112; 212) arranged to cooperate with the laser source (102; 202) to produce a series of intermediate optical pulses (150, 160, 170) each having said plurality of spectral components, and optical fibre (128; 228) arranged to provide dispersion of each intermediate optical pulse to form a plurality of component pulses (152, 154, 156, 162, 164, 166, 172, 174, 176) each corresponding to a spectral component and to compress each component pulse (152, 154, 156, 162, 164, 166, 172, 174, 176), wherein the spectral width of each spectral component is sufficient to inhibit stimulated Brillouin scattering (SBS) of the component pulses (152, 154, 156, 162, 164, 166, 172, 174, 176) within the optical fibre (128; 228).

2. An optical clock according to claim 1 wherein the optical clock (100; 200) is arranged to generate a continuous series of optical clock pulses at a repetition frequency f_{clock} and wherein amplitude modulator is arranged to produce the intermediate optical pulses (150, 160, 170) at a repetition rate f_{clock}/N, where N is the number of spectral components.

3. An optical clock according to claim 1 or claim 2 wherein the laser source (102; 202) comprises a laser oscillator arranged for operation on a plurality of longitudinal modes each corresponding to a spectral component and modulating means (106; 206) arranged to cooperate with the laser oscillator to produce phase-modulation in the output of the laser oscillator.

4. An optical clock according to claim 3 wherein (i) the modulating means (106; 206) comprises a phase-modulator arranged to phase-modulate output of the laser oscillator or (ii) the laser oscillator is a semiconductor laser oscillator and the modulating means (106; 206) comprises means arranged to modulate the injection-current of the semiconductor laser oscillator.

5. An optical clock according to claim 1 or claim 2 wherein the laser source (102, 202) comprises a plurality of laser oscillators each having an output of a respective output wavelength, corresponding to a spectral component, a multiplexer arranged to multiplex outputs of the laser oscillators to produce a multiplexed output, and modulating means arranged to produced phase-modulation in the multiplexed output.

6. An optical clock according to claim 5 wherein (i) the modulating means (106; 206) comprises a phase-modulator arranged to phase-modulate the multiplexed output; (ii) the modulating means (106; 206) comprises plural phase-modulators each arranged to phase-modulate the output of a respective laser oscillator; or (iii) each laser oscillator is a semiconductor laser oscillator and the modulating means (106; 206) comprises means for modulating the injection-currents of the semiconductor laser oscillators.

7. An optical clock according to any of claims 3 to 6 wherein the modulating means (106; 206) is arranged to provide phase-modulation with a minimum modulation-depth consistent with inhibiting SBS in the optical fibre (128; 228).

8. An optical clock according to any of claim 3 to 7 wherein the modulating means (106; 206) is arranged to produce phase-modulation at a frequency equal to half the repetition frequency of the series of optical clock pulses, and, optionally, the modulating means (106; 206) is arranged to provide phase-modulation at less than half the repetition frequency of compressed component pulses output from the optical fibre (128; 228) and wherein the optical clock (100, 200) further comprises means arranged to pulse-pick the compressed component pulses to produce the series of optical clock pulses.

9. A clock according to any preceding claim wherein the optical fibre (128; 228) comprises one of: a standard telecommunications fibre; alternating lengths of standard telecommunications fibre and dispersion-shifted fibre; dispersion decreasing fibre.

10. A clock according to any preceding claim and further comprising an optical amplifier (120) arranged to amplify the series of intermediate optical pulses prior to input thereof to an end of the optical fibre (128, 228) and, optionally further comprising a circulator (122) positioned at said end of the optical fibre (128, 228) and a Bragg grating (124) optically coupled to the circulator (122), and wherein the circulator (122) and the Bragg grating (124) are arranged to reduce amplified spontaneous emission within the optical fibre (128, 228).

11. A method of generating a series of optical clock pulses, the method comprising the steps of:
(i) generating output from a laser source (102; 202), the output having a plurality of spectral components;
(ii) amplitude-modulating the output of the laser source (102; 202) to produce an intermediate series of optical pulses (150, 160, 170) each having said plurality of spectral components; and
(iii) passing the series of intermediate optical pulses through an optical fibre (128; 228) to provide dispersion of each optical pulse to form a plurality of component pulses (152, 154, 156, 162, 164, 166, 172, 174, 176) each corresponding to a spectral component and to compress each component pulse (152, 154, 156, 162, 164, 166, 172, 174, 176),
the spectral width of each spectral component being sufficient to inhibit stimulated Brillouin scattering (SBS) of the component pulses within the optical fibre (128; 228).

12. A method according to claim 11 wherein step (ii) is carried out by amplitude-modulating the output of the laser source (102; 202) at a frequency f_{clock}/N to produce a continuous series of optical clock pulses having a repetition rate f_{clock}.

13. A method according to claim 11 or claim 12 wherein step (i) is carried out by (a) generating output from a laser oscillator arranged to operate on a plurality of longitudinal modes and producing phase-modulation in the output of the laser oscillator, or (b) generating output from a plurality of laser oscillators each having an output of a respective output wavelength, multiplexing the outputs of the laser oscillators to provide a multiplexed output, and producing phase-modulation in the multiplexed output.

14. A method according to 13 wherein the phase-modulation is produced with a minimum modulation depth consistent with inhibiting SBS within the optical fibre (128; 228), and, optionally, the phase-modulation is provided with a modulation frequency equal to half the repetition frequency of the optical clock pulses.

15. An analogue-to-digital converter (300) comprising an optimal clock (100; 200) according to any of claims 2 to 10 and a second amplitude-modulator (302) arranged to modulate the amplitude of optical clock pulses received from the clock (100; 200) in response to input of an analogue signal to be digitised, optionally further comprising a demultiplexer (308) arranged to demultiplex output from the second amplitude modulator (302) to produce a plurality of spectral components and means (310) arranged to detect and digitise each spectral component.

## Patentansprüche

1. Optischer Taktgeber (100; 200) für die Erzeugung einer Serie optischer Taktpulse, wobei der optische Taktgeber (100; 200) eine Laserquelle (102; 202) für die Erzeugung einer Laseremission, die eine Vielzahl spektraler Komponenten aufweist, einen Amplitudenmodulator (112; 212), der so ausgeführt ist, dass er mit der Laserquelle (102; 202) zusammenwirkt, um eine Serie optischer Zwischenpulse (150, 160, 170) zu erzeugen, von denen jeder die Vielzahl spektraler Komponenten aufweist, und eine optische Faser (128; 228) umfasst, die so ausgeführt ist, dass sie für die Dispersion jedes optischen Zwischenpulses sorgt, um eine Vielzahl von Komponentenpulsen (152, 154, 156, 162, 164, 166, 172, 174, 176) zu bilden, von denen jeder einer spektralen Komponente entspricht, und um jeden Komponentenpuls (152, 154, 156,162, 164, 166, 172, 174, 176) zu komprimieren, wobei die spektrale Breite jeder spektralen Komponente ausreichend ist, um die stimulierte Brillouin-Streuung (SBS) der Komponentenpulse (152, 154, 156, 162, 164, 166, 172, 174, 176) in der optischen Faser (128; 228) zu verhindern.

2. Optischer Taktgeber nach Anspruch 1, wobei der optische Taktgeber (100; 200) so ausgeführt ist, dass eine kontinuierliche Serie optischer Taktpulse mit einer Wiederholungsfrequenz f_{Uhr} erzeugt wird, und wobei der Amplitudenmodulator so ausgeführt ist, dass die optischen Zwischenpulse (150, 160, 170) mit einer Wiederholungsrate f_{Taktgeber}/N erzeugt werden, worin N die Anzahl der spektralen Komponenten ist.

3. Optischer Taktgeber nach Anspruch 1 oder Anspruch 2, wobei die Laserquelle (102; 202) einen Laseroszillator, der für den Betrieb mit einer Vielzahl von Longitudinalmoden ausgeführt ist, von denen jede einer spektralen Komponente entspricht, und eine Modulationseinrichtung (106; 206) umfasst, die so ausgeführt ist, dass sie mit dem Laseroszillator zusammenwirkt, um eine Phasenmodulation der Laseremission des Laseroszillators zu erzeugen.

4. Optischer Taktgeber nach Anspruch 3, wobei (i) die Modulationseinrichtung (106; 206) einen Phasenmodulator umfasst, der so ausgeführt ist, dass er für eine Phasenmodulation der Laseremission des Laseroszillators sorgt oder (ii) der Laseroszillator ein Halbleiterlaseroszillator ist und die Modulationseinrichtung (106; 206) eine Einrichtung umfasst, die so ausgeführt ist, dass der Injektionsstrom des Halbleiterlaseroszillators moduliert wird.

5. Optischer Taktgeber nach Anspruch 1 oder Anspruch 2, wobei die Laserquelle (102, 202) eine Vielzahl von Laseroszillatoren, von denen jeder eine Laseremission bei einer jeweiligen Laseremissionswellenlänge hat, die einer spektralen Komponente entspricht, einen Multiplexer, der so ausgeführt ist, dass die Laseremissionen der Laseroszillatoren durch Multiplexing zusammengeführt werden, um eine zusammengeführte Laseremission zu erzeugen, und eine Modulationseinrichtung, die so ausgeführt ist, dass in der zusammengeführten Laseremission eine Phasenmodulation erzeugt wird, umfasst.

6. Optischer Taktgeber nach Anspruch 5, wobei (i) die Modulationseinrichtung (106; 206) einen Phasenmodulator umfasst, der so ausgeführt ist, dass er für eine Phasenmodulation der zusammengeführten Laseremission sorgt; (ii) die Modulationseinrichtung (106; 206) mehre Phasenmodulatoren umfasst, von denen jeder so ausgeführt ist, das er für die Phasenmodulation der Laseremission eines entsprechenden Laseroszillators sorgt; oder (iii) jeder Laseroszillator ein Halbleiterlaseroszillator ist und die Modulationseinrichtung (106; 206) eine Einrichtung zum Modulieren der Injektionsströme der Halbleiterlaseroszillatoren umfasst.

7. Optischer Taktgeber nach einem der Ansprüche 3 bis 6, wobei die Modulationseinrichtung (106; 206) so ausgeführt ist, dass eine Phasenmodulation mit einer minimalen Modulationstiefe erhalten wird, die mit einer Verhinderung der SBS in der optischen Faser (128; 228) einher geht.

8. Optischer Taktgeber nach einem der Ansprüche 3 bis 7, wobei die Modulationseinrichtung (106; 206) so ausgeführt ist, dass eine Phasenmodulation bei einer Frequenz erzeugt wird, die der Hälfte der Wiederholungsfrequenz der Serie optischer Taktpulse entspricht, und optional die Modulationseinrichtung (106; 206) so ausgeführt ist, dass eine Phasenmodulation bei weniger als der Hälfte der Wiederholungsfrequenz der Laseremission der komprimierten Komponentenpulse von der optischen Faser (128; 228) erhalten wird, und wobei der optische Taktgeber (100, 200) weiterhin eine Einrichtung umfasst, die so ausgeführt ist, dass Pulse der komprimierten Komponentenpulse ausgewählt werden können, um die Serie optischer Taktpulse zu erzeugen.

9. Taktgeber nach einem der vorhergehenden Ansprüche, wobei die optische Faser (128; 228) eines der folgenden Elemente umfasst: eine Standardnachrichtenübermittlungsfaser; wechselnde Längen von Standardnachrichtenübertragungsfaser und dispersionsverschobener Faser; Faser mit abnehmender Dispersion.

10. Taktgeber nach einem der vorhergehenden Ansprüche, der weiterhin einen optischen Verstärker (120) umfasst, der so ausgeführt ist, dass er die Serie optischer Zwischenpulse vor ihrer Eingabe in ein Ende der optischen Faser (128, 228) verstärkt, und der optional weiterhin einen Zirkulator (122), der an dem Ende der optischen Faser (128, 228) angeordnet ist, und ein Bragg-Gitter (124), das optisch mit dem Zirkulator (122) gekoppelt ist, umfasst, und wobei der Zirkulator (122) und das Bragg-Gitter (124) so ausgeführt sind, dass die verstärkte spontane Emission innerhalb der optischen Faser (128, 228) verringert wird.

11. Verfahren zum Erzeugen einer Serie optischer Taktpulse, wobei das Verfahren die folgenden Schritte umfasst:
(i) Erzeugen einer Laseremission von einer Laserquelle (102; 202), wobei die Laseremission eine Vielzahl spektraler Komponenten aufweist;
(ii) Modulieren der Amplitude der Laseremission der Laserquelle (102; 202), um eine Zwischenserie optischer Pulse (150, 160, 170) zu erzeugen, von denen jeder diese Vielzahl spektraler Komponenten aufweist; und
(iii) Durchleiten der Serie optischer Zwischenpulse durch eine optische Faser (128; 228), um für die Dispersion jedes optischen Pulses zu sorgen, um eine Vielzahl von Komponentenpulsen (152, 154, 156, 162, 164, 166, 172, 176) zu bilden, von denen jeder einer spektralen Komponente entspricht, und um jeden Komponentenpuls (152, 154, 156, 162, 164, 166, 172, 174, 176) zu komprimieren,
wobei die spektrale Breite jeder spektralen Komponente ausreichend ist, um die stimulierte Brillouin-Streuung (SBS) der Komponentenpulse innerhalb der optischen Faser (128; 228) zu verhindern.

12. Verfahren nach Anspruch 11, wobei Schritt (ii) durch Modulieren der Amplitude der Laseremission der Laserquelle (102; 202) bei einer Frequenz f_{Taktgeber}/N durchgeführt wird, um eine kontinuierliche Serie optischer Taktpulse zu erzeugen, die eine Wiederholungsrate f_{Taktgeber} aufweisen.

13. Verfahren nach Anspruch 11 oder Anspruch 12, wobei Schritt (i) ausgeführt wird durch (a) Erzeugen der Laseremission eines Laseroszillators, der so ausgeführt ist, dass er eine Emission bei einer Vielzahl von Longitudinalmoden hat, und Modulieren der Phase der Laseremission des Laseroszillators, oder (b) Erzeugen der Laseremission von einer Vielzahl von Laseroszillatoren, von denen jeder eine Emission bei einer jeweiligen Laseremissionswellenlänge hat, Zusammenführen durch Multiplexing der Laseremissionen der Laseroszillatoren, um für eine zusammengeführte Laseremission zu sorgen, und Modulieren der Phase in der zusammengeführten Laseremission.

14. Verfahren nach Anspruch 13, wobei die Phasenmodulation mit einer minimalen Modulationstiefe erzeugt wird, die mit der Verhinderung von SBS innerhalb der optischen Faser (128; 228) einher geht, und optional die Phasenmodulation mit einer Modulationsfrequenz versehen wird, die der halben Wiederholungsfrequenz der optischen Taktpulse entspricht.

15. Analog-Digital-Wandler (300), der einen optischen Taktgeber (100; 200) nach einem der Ansprüche 2 bis 10 und einen zweiten Amplitudenmodulator (302) enthält, der so ausgeführt ist, dass die Amplitude der optischen Taktpulse, die von dem Taktgeber (100; 200) erhalten werden, als Antwort auf die Eingabe eines analogen und zu digitalisierenden Signals moduliert wird, und der optional weiterhin einen Demultiplexer (308), der so ausgeführt ist, dass die Ausgabe des zweiten Amplitudenmodulators (302) durch Demultiplexing aufgeteilt wird, um eine Vielzahl spektraler Komponenten zu erzeugen, und eine Einrichtung (310) umfasst, die so ausgeführt ist, dass jede spektrale Komponente detektiert und digitalisiert wird.

## Revendications

1. Horloge optique (100 ; 200) pour générer une série d'impulsions d'horloge optique, l'horloge optique (100 ; 200) comprenant une source laser (102 ; 202) pour générer une sortie possédant une pluralité de composantes spectrales, un modulateur d'amplitude (112 ; 212) agencé pour coopérer avec la source laser (102 ; 202) pour produire une série d'impulsions optiques intermédiaires (150, 160, 170), chacune possédant ladite pluralité de composantes spectrales, et une fibre optique (128 ; 228) agencée pour fournir une dispersion de chaque impulsion optique intermédiaire pour former une pluralité d'impulsions composantes (152, 154, 156, 162, 164, 166, 172, 174, 176), chacune correspondant à une composante spectrale, et pour comprimer chaque impulsion composante (152, 154, 156, 162, 164, 166, 172, 174, 176), dans laquelle la largeur spectrale de chaque composante spectrale est suffisante pour empêcher une diffusion de Brillouin stimulée (SBS) des impulsions composantes (152, 154, 156, 162, 164, 166, 172, 174, 176) à l'intérieur de la fibre optique (128 ; 228).

2. Horloge optique selon la revendication 1 dans laquelle l'horloge optique (100 ; 200) est agencée pour générer une série continue d'impulsions d'horloge optique à une fréquence de répétition f_{clock} et dans laquelle le modulateur d'amplitude est agencé pour produire les impulsions optiques intermédiaires (150, 160, 170) à une cadence de répétition f_{clock}/N, où N est le nombre de composantes spectrales.

3. Horloge optique selon la revendication 1 ou la revendication 2, dans laquelle la source laser (102 ; 202) comprend un oscillateur laser agencé pour fonctionner sur une pluralité de modes longitudinaux, chacun correspondant à une composante spectrale, et un moyen de modulation (106 ; 206) agencé pour coopérer avec l'oscillateur laser pour produire une modulation de phase dans la sortie de l'oscillateur laser.

4. Horloge optique selon la revendication 3, dans laquelle (i) le moyen de modulation (106 ; 206) comprend un modulateur de phase agencé pour moduler en phase la sortie de l'oscillateur laser ou (ii) l'oscillateur laser est un oscillateur laser à semi-conducteur et le moyen de modulation (106 ; 206) comprend un moyen agencé pour moduler le courant d'injection de l'oscillateur laser à semi-conducteur.

5. Horloge optique selon la revendication 1 ou la revendication 2, dans laquelle la source laser (102, 202) comprend une pluralité d'oscillateurs laser, chacun possédant une sortie d'une longueur d'onde de sortie respective correspondant à une composante spectrale, un multiplexeur agencé pour multiplexer les sorties des oscillateurs laser pour produire une sortie multiplexée, et un moyen de modulation agencé pour produire une modulation de phase dans la sortie multiplexée.

6. Horloge optique selon la revendication 5, dans laquelle (i) le moyen de modulation (106 ; 206) comprend un modulateur de phase agencé pour moduler en phase la sortie multiplexée ; (ii) le moyen de modulation (106 ; 206) comprend plusieurs modulateurs de phase, chacun agencé pour moduler en phase la sortie d'un oscillateur laser respectif ; ou (iii) chaque oscillateur laser est un oscillateur laser à semi-conducteur et le moyen de modulation (106 ; 206) comprend un moyen pour moduler les courants d'injection des oscillateurs laser à semi-conducteur.

7. Horloge optique selon une quelconque des revendications 3 à 6, dans laquelle le moyen de modulation (106 ; 206) est agencé pour fournir une modulation de phase avec une profondeur de modulation minimale cohérente avec le blocage de SBS dans la fibre optique (128 ; 228).

8. Horloge optique selon une quelconque des revendications 3 à 7, dans laquelle le moyen de modulation (106 ; 206) est agencé pour produire une modulation de phase à une fréquence égale à la moitié de la fréquence de répétition de la série d'impulsions d'horloge optique, et, facultativement, le moyen de modulation (106 ; 206) est agencé pour fournir une modulation de phase à moins de la moitié la fréquence de répétition d'impulsions comprimées sorties à partir de la fibre optique (128 ; 228) et dans laquelle l'horloge optique (100, 200) comprimées en outre un moyen agencé pour sélectionner les impulsions composantes compressées pour produire la série d'impulsions d'horloge optique.

9. Horloge selon une revendication précédente quelconque, dans laquelle la fibre optique (128 ; 228) comprend une parmi : une fibre de télécommunication standard ; des longueurs alternées de fibre de télécommunication standard et de fibre à dispersion décalée ; une fibre diminuant en dispersion.

10. Horloge selon une revendication précédente quelconque, et comprenant en outre un amplificateur optique (120) agencé pour amplifier la série d'impulsions optiques intermédiaires avant son entrée dans une extrémité de la fibre optique (128, 228) et, comprenant en outre facultativement un circulateur (122) positionné à ladite extrémité de la fibre optique (128, 228) et un réseau de Bragg (124) couplé optiquement au circulateur (122), et dans laquelle le circulateur (122) et le réseau de Bragg (124) sont agencés pour réduire une émission spontanée amplifiée à l'intérieur de la fibre optique (128, 228).

11. Procédé de génération d'une série d'impulsions d'horloge optique, le procédé comprenant les étapes de :
(i) génération d'une sortie à partir d'une source laser (102 ; 202), la sortie possédant une pluralité de composantes spectrales ;
(ii) modulation en amplitude de la sortie de la source laser (102 ; 202) pour produire une série intermédiaire d'impulsions optiques (150, 160, 170), chacune possédant ladite pluralité de composantes spectrales ; et
(iii) passage de la série d'impulsions optiques intermédiaires à travers une fibre optique (128 ; 228) pour fournir une dispersion de chaque impulsion optique pour former une pluralité d'impulsions composantes (152, 154, 156, 162, 164, 166, 172, 174, 176), chacune correspondant à une composante spectrale, et pour comprimée chaque impulsion composante (152, 154, 156, 162, 164, 166, 172, 174, 176), la largeur spectrale de chaque composante spectrale étant suffisante pour empêcher une diffusion de Brillouin stimulée (SBS) des impulsions composantes à l'intérieur de la fibre optique (128 ; 228).

12. Procédé selon la revendication 11, dans lequel l'étape (ii) est réalisée en modulant en amplitude la sortie de la source laser (102 ; 202) à une fréquence f_{clock}/N pour produire une série continue d'impulsions d'horloge optique possédant une cadence de répétition f_{clock}.

13. Procédé selon la revendication 11 ou la revendication 12, dans lequel l'étape (i) est réalisée en (a) générant une sortie à partir d'un oscillateur laser agencé pour fonctionner sur une pluralité de modes longitudinaux et produisant une modulation de phase dans la sortie de l'oscillateur laser, ou (b) en générant une sortie à partir d'une pluralité d'oscillateurs laser, chacun possédant une sortie d'une longueur d'onde de sortie respective, en multiplexant les sorties des oscillateurs laser pour fournir une sortie multiplexée, et en produisant une modulation de phase dans la sortie multiplexée.

14. Procédé selon 13, dans lequel la modulation de phase est produite avec une profondeur de modulation minimale cohérente avec le blocage de SBS à l'intérieur de la fibre optique (128 ; 228), et, facultativement, la modulation de phase est pourvue d'une fréquence de modulation égale à la moitié de la fréquence de répétition des impulsions d'horloge optique.

15. Convertisseur analogique-numérique (300) comprenant une horloge optique (100 ; 200) selon une quelconque des revendications 2 à 10 et un second modulateur d'amplitude (302) agencé pour moduler l'amplitude d'impulsions d'horloge optique reçues à partir de l'horloge (100 ; 200) en réponse à une entrée d'un signal analogique destiné à être numérisé, comprenant en outre facultativement un démultiplexeur (308) agencé pour démultiplexer une sortie à partir du second modulateur d'amplitude (302) pour produire une pluralité de composantes spectrales et un moyen (310) agencé pour détecter et numériser chaque composante spectrale.
